(19) Europäisches Patentamt
European Patent Office
Office européen des brevets

(11) **EP 2 271 920 B1**

(12) **EUROPÄISCHE PATENTSCHRIFT**

(45) Veröffentlichungstag und Bekanntmachung des Hinweises auf die Patenterteilung:
**11.06.2014 Patentblatt 2014/24**

(21) Anmeldenummer: **09734049.1**

(22) Anmeldetag: **23.04.2009**

(51) Int Cl.:
*G01N 27/406* (2006.01)   *F02D 41/24* (2006.01)

(86) Internationale Anmeldenummer:
**PCT/EP2009/054864**

(87) Internationale Veröffentlichungsnummer:
**WO 2009/130266 (29.10.2009 Gazette 2009/44)**

(54) **ANSTEUERSCHALTUNG FÜR EINEN ELEKTROCHEMISCHEN GASSENSOR UND VERFAHREN ZUM EINSTELLEN EINES ELEKTROCHEMISCHEN GASSENSORS**

CONTROL CIRCUIT FOR AN ELECTROCHEMICAL GAS SENSOR AND METHOD FOR ADJUSTING AN ELECTROCHEMICAL GAS SENSOR

CIRCUIT DE COMMANDE POUR CAPTEUR DE GAZ ÉLECTROCHIMIQUE ET PROCÉDÉ DE RÉGLAGE D'UN TEL CAPTEUR DE GAZ ÉLECTROCHIMIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.04.2008 DE 102008020651**

(43) Veröffentlichungstag der Anmeldung:
**12.01.2011 Patentblatt 2011/02**

(73) Patentinhaber: **Continental Automotive GmbH 30165 Hannover (DE)**

(72) Erfinder: **WAGNER, Ekkehart-Peter 93077 Bad Abbach (DE)**

(56) Entgegenhaltungen:
**EP-A- 1 460 418      DE-A1- 19 708 011
DE-A1-102006 030 437   DE-A1-102006 041 477
DE-A1-102007 043 728**

**Beschreibung**

Die Erfindung betrifft einen elektrochemischen Gassensor und ein Verfahren zum Einstellen eines elektrochemischen Gassensors. Elektrochemische Gassensoren werden zur Messung von Konzentrationen eines vorgegebenen Gasbestandteils in einem Gas verwendet. Bspw. wird bei Verbrennungsmaschinen von Kraftfahrzeugen die Konzentration von Sauerstoff im Abgas gemessen. Anhand dieser Messung wird bestimmt, ob das Luft-Kraftstoff-Verhältnis der Verbrennungsmaschine den gewünschten Wert hat.

In der DE 10 2005 033 263 A1 wird ein Gaskonzentrationsmessgerät vorgestellt, bei der die Impedanz des Gassensorelements mithilfe einer Rechenschaltung zur Steuerung der Aktivierung und zur Diagnose des Gassensorelements gemessen wird. Zur Messung der Gaskonzentration muss der Strom, der durch den Gassensor fließt, oder die Spannung, die über dem Gassensor anliegt, geregelt werden. Dies dient dazu, den Gassensor in einen Zustand zu versetzen, in dem die Konzentration gemessen werden kann.

Es hat sich herausgestellt, dass die Gassensoren großen Produktionsschwankungen unterliegen, sodass ihre elektrischen Eigenschaften wie ihre Impedanzen sich von Gassensor zu Gassensor bspw. um bis zu 20 % unterscheiden. Um sicherzustellen, dass die Regelschaltung auch bei großen Abweichungen nicht instabil wird, muss der Regler so ausgelegt werden, dass er relativ langsam reagiert. Dies bewirkt, dass das Luft-Kraftstoff-Verhältnis nicht über die gesamte Zeit stabil ist, wodurch unnötig viel Kraftstoff verbraucht wird.

Es ist somit Aufgabe der Erfindung, einen elektrochemischen Gassensor bereitzustellen, der schneller geregelt werden kann.

Es ist auch Aufgabe der Erfindung, ein Verfahren zum Einstellen eines solchen elektrochemischen Gassensors bereitzustellen.

Diese Aufgaben werden durch den Gegenstand des unabhängigen Patentanspruchs gelöst. Weitere vorteilhafte Ausgestaltungen ergeben sich aus den Unteransprüchen.

Es wird eine Ansteuerschaltung für einen elektrochemischen Gassensor für ein Kraftfahrzeug bereitgestellt, bei dem ein digitaler Regler vorgesehen ist, der einen Rückkopplungseingang und einen Ausgang aufweist. Der digitale Regler empfängt über den Rückkopplungseingang einen Wert für die über einer Gassensorzelle anliegenden Spannung. Am Ausgang stellt der digitale Regler einen Stellwert für einen in die Gassensorzelle zufließenden Strom bereit.

Eine Detektionsschaltung ist zum Erfassen der Eigenschaften der Gassensorzelle vorgesehen. Sie ist ebenso zum Einstellen der dynamischen Regeleigenschaften des digitalen Reglers entsprechend der Eigenschaften der Gassensorzelle vorgesehen.

Die dynamischen Regeleigenschaften des digitalen Reglers sind z. B. durch eine z-Transformierte

$$F_z(z) = \frac{a_1 z + a_2}{z^2 + b_1 z + b_2}$$

charakterisiert. Bei dem Einstellen werden die Parameter $a_1$, $a_2$, $b_1$ und $b_2$ verändert. Die dynamischen Eigenschaften des digitalen Reglers charakterisieren, wie schnell und evt. mit welchen Überschwingungen der digitale Regler auf Abweichungen im Sollwert reagiert.

Der elektrochemische Gassensor bietet den Vorteil, dass entsprechend der Eigenschaften der Gassensorzellen der digitale Regler eingestellt werden kann. Somit kann die Reglereigenschaft jeweils an die verbaute Gassensorzelle angepasst werden, wodurch die digitale Regelschaltung so eingestellt wird, dass sie bei Abweichungen schnell reagiert, ohne die Stabilität der Regelungsschleife zu gefährden.

Zudem können die Regelparameter an den Betriebszustand des Gassensors an die Temperatur angepasst werden. Zudem ist es möglich, dass Sensoren unterschiedliche Typen, bspw. unterschiedliche Hersteller, zu verwenden, da der digitale Regler mit der Detektionsschaltung automatisch angepasst werden kann.

In einer Ausführungsform ist die Detektionsschaltung zumindest teilweise in einem Mikrocontroller vorgesehen. Der Mikrocontroller kann eine Vielzahl von Daten verwalten, die mit den erfassten Eigenschaften der Gassensorzelle verglichen werden.

Erfindungsgemäß ist die Detektionsschaltung so ausgebildet, dass sie anhand der über der Gassensorzelle abfallenden Spannung die Eigenschaften der Gassensorzelle erfasst, wenn ein Stromsprung am Ausgang des digitalen Reglers anliegt. Sprungantworten sind charakteristisch für das dynamische Verhalten von Regelungsgliedern und erlauben so einen guten Rückschluss auf die Regeleigenschaften des gemessenen Gassensorzelle.

In einer weiteren Ausführungsform ist die Detektionsschaltung auch zum Erfassen der Temperatur der Gassensorzelle ausgebildet. Die Temperatur hat auch einen großen Einfluss auf das Verhalten der Gassensorzelle. Somit ist es hilfreich, die Eigenschaften der Gassensorzelle bei der gemessenen Temperatur zu betrachten, um einen Rückschluss auf bspw. den Sensortyp zu erhalten.

In einer weiteren Ausführungsform wird die Eigenschaft der Gassensorzelle anhand der Impedanz der Gassensorzelle berechnet, um die Gassensorzelle möglichst genau zu charakterisieren.

Die Detektionsschaltung weist in einer bevorzugten Ausführungsform einen Analog-Digital-Wandler zum Wandeln der über der Gassensorzelle anliegenden Spannung auf. Die Wandlung in einen digitalen Wert erlaubt die digitale Berechnung der Gassensoreigenschaften, was den Vergleich mit bereits bekannten Gassensoren vereinfacht.

Besonders geeignet ist der Einsatz des beschriebenen elektrochemischen Gassensors, falls die Gassensorzelle eine Nernstzelle enthält, da eine solche von einer Vielzahl von Herstellern und jeweils mit großen Produktionsschwankungen hergestellt wird.

Die Erfindung betrifft auch die Verwendung eines erfindungsgemäßen elektrochemischen Gassensors in einem Kraftfahrzeug zum Regeln des Luft-Kraftstoff-Gemisches eines Motors des Kraftfahrzeugs. Das erfindungsgemäße Vorsehen der Detektionsschaltung erlaubt eine genauere Einstellung des Regelkreises für den Gassensor. Dadurch kann der elektrochemische Gassensor dynamischer geregelt werden, wodurch er schneller wird, was letztendlich den Kraftstoffverbrauch verringert.

Die Erfindung betrifft auch ein Verfahren zum Einstellen eines elektrochemischen Gassensors, wobei zunächst eine erfindungsgemäße Ansteuerschaltung für einen elektrochemischen Gassensor bereitgestellt wird. Der Ausgang des digitalen Reglers wird so angesteuert, dass der Strom am Ausgang einen Sprung mit maximaler Steigung erzeugt wird. Anschließend werden die Eigenschaften der Gassensorzelle anhand der Spannung am Rückkopplungseingang des digitalen Reglers detektiert. Mittels dieses Verfahrens kann die Gassensorzelle charakterisiert werden, um die Eigenschaften des digitalen Reglers in Abhängigkeit der Eigenschaften der Gassensorzelle einzustellen.

In einer bevorzugten Ausführungsform dient das Verfahren zum Überprüfen des Abgasstroms eines Motors und die Schritte des Ansteuerns des Ausgangs und des Detektierens der Eigenschaften der Gassensorzelle werden zumindest beim Starten des Motors durchgeführt. Damit wird jeweils beim Starten überprüft, ob sich die Eigenschaften der Gassensorzelle, z. B. wegen Alterung, verändert haben oder ob bei einer Reparatur eine neue Gassensorzelle eingebaut wurde. Daraufhin wird der digitale Regler jeweils an die veränderten Eigenschaften der Gassensorzelle angepasst.

In einer weiteren Ausführungsform werden die Regeleigenschaften mehrmals während der Fahrt eingestellt, um sie an eventuellen Temperaturänderungen anzupassen.

Figur 1    zeigt eine erfindungsgemäße Ansteuerschaltung für einen Gaskonzentrationssensor.

Figur 2    zeigt das Frequenzverhalten eines erfindungsgemäßen Gaskompensationssensors.

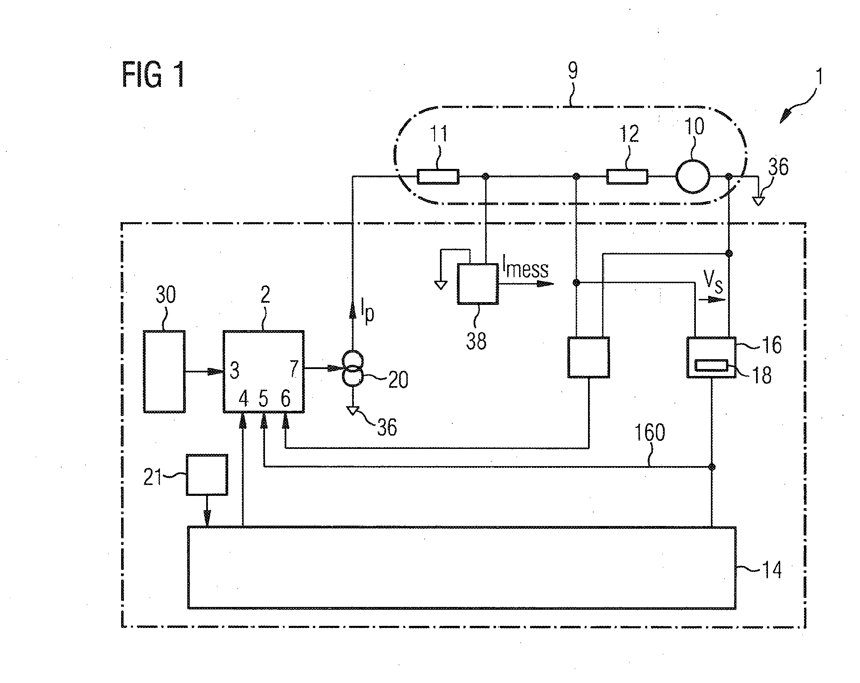

Figur 1 zeigt eine erfindungsgemäßen Ansteuerschaltung für elektrochemischen Gaskonzentrationssensor. Die Baugruppe 1 aus Ansteuerschaltung 100 und Nernstzelle 9 enthält eine Nernstzelle 9, sowie einen digitalen Regler 2 und einen Sollwertgeber 30. Der digitale Regler 2 steuert eine Stromquelle 20 an, die den Strom Ip, der in die Nernstzelle 9 fließt, bestimmt. Der digitale Regler empfängt an seinem ersten Eingang 3 einen Sollwert zum Ansteuern des Stromreglers 20. Alle Elemente aus Figur 1, die nicht Teil der Nernstzelle 9 sind, sind Teil der Ansteuerschaltung 100.

Die Nernstzelle 9 enthält einen ersten Widerstand 11, der den Widerstand über den Zuleitungen zur Nernstzelle repräsentiert und einen zweiten Widerstand 12, der den Innenwiderstand der Nernstzelle 12 repräsentiert. Über der Nernstzelle 9 fällt eine Spannung 10 ab, die mit dem Kreis gekennzeichnet ist. Der erste Widerstand 11, der zweite Widerstand 12 und die Spannung 10 sind in Reihe miteinander geschaltet. Dabei ist der erste Anschluss der Spannung 10 mit der Masse 36 verbunden, während sein zweiter Anschluss mit einem ersten Anschluss des zweiten Widerstands 12 verbunden ist.

Der zweite Anschluss des zweiten Widerstands 12 ist mit dem ersten Anschluss des ersten Widerstands 11 verbunden, dessen zweiter Ausgang mit dem Ausgang der Stromquelle 20 verbunden ist. Das Abtastglied 16 ist mit seinem ersten Eingang mit der Masse 36 und mit seinem zweiten Eingang mit dem zweiten Anschluss des zweiten Widerstands 12 verbunden. Zwischen diesen beiden Eingängen des Abtastglieds 16 wird die Spannung Vs erzeugt, die in diesem Abtastglied in einen Digitalwert umgewandelt wird. Dieser Digitalwert wird über den Rückkopplungspfad 160 an den Eingang 5 des digitalen Reglers 2 geführt.

Bei dem vorgestellten Gassensor handelt es sich um einen Lambdaregelungs-Sauerstoffsensor. Dieser sorgt dafür, dass der Motor mit einem konstanten Luft-Kraftstoff-Gemisch betrieben wird. Die Spannung Vs wird auf einen konstanten Wert eingestellt. Der digitale Regler 2 steuert an seinem Ausgang 7 die Stromquelle 20 so an, dass der Strom Ip eine Spannung Vs bewirkt, die gleich der Spannung im Sollwertgeber 30 ist. Die Größe des Stroms Ip ist ein Maß für den Lambda-Wert.

Die Spannung Vs wird auch von dem Begrenzer 17 gemessen. Dieser Begrenzer 17 misst, ob die Spannung Vs einen bestimmten Schwellwert überschreitet. Ist dies der Fall, gibt der Begrenzer 17 einen Signalwert an den digitalen Regler 2 aus, der diesen Wert an seinem Eingang 6 empfängt. Überschreitet die Spannung Vs den vorbestimmten Schwellwert, wird der Strom Ip reduziert.

Der Strom Ip wird mit einer in der Figur mit dem Bezugszeichen 38 gekennzeichnete Messschaltung gemessen. Der Messwert Imess ist ein Maß für den in der Motorsteuerung einzustellenden Wert für Lambda und wird an den Mikrocontroller der Motorsteuerung ausgegeben.

Der Mikroprozessor 14 enthält eine Detektionsschaltung zum Erkennen der Eigenschaften der Nernstzelle 9. Beim Start des Motors wird vom digitalen Regler 2 die Stromquelle 20 so angesteuert, dass sie einen Stromsprung von zum Beispiel 0 mA auf 5 mA durchführt. Der Treiber der Stromquelle 20 ist so dimensioniert, dass der Anstieg so steil wie möglich ist. Der Verlauf der Spannung Vs reagiert entsprechend auf diesen Stromsprung.

Die Spannung Vs wird wie oben beschrieben von dem Abtastglied 16 abgetastet und mit dem in dem Abtastglied vorhandenen AD-Wandler 18 in digitale Werte gewandelt. Die Abfolge der digitalen Werte wird an die Detektionsschaltung 14 ausgegeben. Die Detektionsschaltung 14 erkennt aufgrund des Spannungsverlaufs Vs Eigenschaften der Nernstzelle 9.

Die Nernstzellen 9 unterschiedlicher Hersteller und unterschiedlicher Produktionslose unterscheiden sich bezüglich ihres Übertragungsverhaltens. Die gemessene Sprungantwort charakterisiert das Übertragungsverhalten der Nernstzelle 9 und wird als Grundlage der Regelauswertung verwendet. In dem Speicher 21 sind die Frequenzverläufe für verschiedene Typen von Nernstzellen gespeichert. Die Detektionsschaltung 14 vergleicht die vom Abtaster 16 empfangenen Spannungsverläufe mit den Spannungsverläufen, die in dem Speicher 21 abgespeichert wurden.

Nachdem die Detektionsschaltung 14 den richtigen Sensortyp erkannt hat, stellt sie die Eigenschaften des digitalen Reglers 2 ein. Dazu ändert sie die Übertragungskennlinie des digitalen Reglers 2. Die digitale Übertragungskennlinie des digitalen Reglers 2 ist bspw. durch ein Bode-Diagramm durch Betrag und Phase gekennzeichnet. Die Kennlinien werden entsprechend der Eigenschaften der Nernstzelle durch eine Betrags-Phasen-Kalibrierung angepasst.

Sensoren werden üblicherweise mit hohen Produktionsschwankungen hergestellt. Abweichungen von bis zu 20 % im Übertragungsverhalten sind keine Seltenheit. Mittels der Detektionsschaltung 14 kann detektiert werden, ob solche Abweichungen von einem Normalwert vorliegen. Ist dies der Fall, wird der digitale Regler 2 ebenfalls so eingestellt, dass das Regelverhalten des gesamten Systems optimiert wird.

Besonders die Verwendung der digitalen Reglerstruktur ermöglicht, dass mittels einer Software aus der Sprungantwort des Sensors direkt die notwendigen Adaptionen der Regelparameter extrahiert werden. Die geänderten Regelparameter können direkt in den digitalen Regler 2 hineinprogrammiert werden. Die Filterstruktur hat den Vorteil, dass die Regelcharakteristik einfach an verschiedene Zustände der angeschlossenen linearen Lambdasonde angepasst werden kann. Wird ein anderer Sondentyp angeschlossen, ist lediglich eine Datenänderung in der Detektionsschaltung 14 notwendig, was wesentlich einfacher und schneller durchgeführt werden kann als eine Hardware-Änderung.

Wenn die Detektionsschaltung 14 so programmiert ist, dass sie auch Parameter wie Trimmwiderstand, Heizwiderstände und die Sprungantwort der Sonde auswerten kann, ist auch die vollautomatische Anpassung der Regelcharakteristik an verschiedene vordefinierte Sensortypen oder gar die vollautomatische individuelle Anpassung der Reglercharakteristik an den angeschlossenen Sensor möglich.

Die vollautomatische Kalibrierung der Reglercharakteristik ermöglicht die intelligente Unterscheidung zwischen verschiedenen Typen von linearen Lambda-Sensoren und die automatische Adaptierung des Regelkreises.

Die Controllercharakteristik wird individuell an den jeweiligen angeschlossenen linearen Lambda-Sensor angepasst, um das Regelverhalten unter Berücksichtigung der Frequenzcharakteristik des Sensors durch Produktionsstreuung, Alterung, Temperaturschwankungen anzupassen.

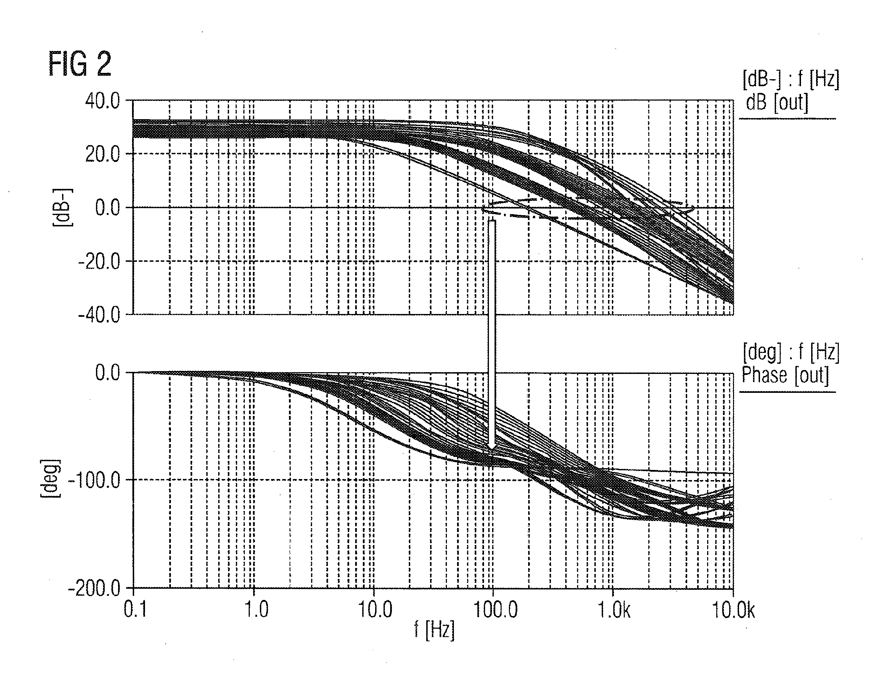

Figur 2 zeigt in einem Bode-Diagramm die Reglungscharakteristik eines offenen Regelkreises eines Gassensors nach Figur 1. Es wurde eine Vielzahl von Simulationen durchgeführt, bei denen die Eigenschaften des digitalen Reglers 2 und des Gassensors 9 entsprechend ihrer Produktionsabweichungen variiert wurden. Es zeigt sich, dass der Amplituden- und der Frequenzverlauf des offenen Regelkreises sehr stark von den Parametern des digitalen Reglers 2 und des Gassensors 9 abhängt.

Zur Beurteilung der Stabilität des Regelkreises wird die Phasenreserve bei der Verstärkung 0 dB abgelesen. Die Phasenreserve variiert bei den in Figur 2 gezeigten Simulationen zwischen 60 und 100°. Um die Phasenreserve erhöhen zu können, werden die Eigenschaften des digitalen Reglers 2 von den Eigenschaften des Gassensors 9 abhängig gemacht. Dadurch verringert sich die Variation der Amplituden- und Frequenzverläufe des Bode-Diagramms. Dadurch kann ein höherer Wert für die Phasenreserve erzielt werden.

**Patentansprüche**

1. Ansteuerschaltung für einen elektrochemischen Gassensor (1) für ein Kraftfahrzeug, Folgendes aufweisend:

    - einen digitalen Regler (2) mit einem Rückkopplungseingang (4) und einem Ausgang (7), wobei der digitale Regler (2) über den Rückkopplungseingang (4) einen Wert (Vs) für die über einer Gassensorzelle (9) anliegenden Spannung erhält, und der Ausgang (7) einen Stellwert für den in die Gassensorzelle (9) fließenden Strom (Ip) bereitstellt,
    - eine Detektionsschaltung (14) zum Erfassen der Eigenschaften der Gassensorzelle (9) und zum Einstellen der dynamischen Regeleigenschaften des digitalen Reglers (2) entsprechend der Eigenschaften der Gassensorzelle (9),

    **dadurch gekennzeichnet, dass** die Detektionsschaltung (14) so ausgebildet ist, dass sie anhand der über der Gassensorzelle (9) abfallenden Spannung (10) bei Anlegen eines Sprungs des in die Gassensorzelle (9) fließenden Stroms (Ip) die Eigenschaften der Gassensorzelle (9) erfasst.

**2.** Ansteuerschaltung für einen elektrochemischen Gassensor nach Anspruch 1,
**dadurch gekennzeichnet, dass** die Detektionsschaltung (14) zumindest teilweise in einem Mikrocontroller vorgesehen ist.

**3.** Ansteuerschaltung für einen elektrochemischen Gassensor nach Anspruch 1 oder 2,
**dadurch gekennzeichnet, dass** die Detektionsschaltung (14) anhand der Sprungantwort der Gassensorzelle (9) die Eigenschaften der Gassensorzelle (9) berechnet.

**4.** Ansteuerschaltung für einen elektrochemischen Gassensor nach einem der Ansprüche 1 bis 3,
**dadurch gekennzeichnet, dass** die Detektionsschaltung (14) anhand der Impedanz (12) der Gassensorzelle (9) die Eigenschaften der Gassensorzelle (9) berechnet.

**5.** Ansteuerschaltung für einen elektrochemischen Gassensor nach einem der Ansprüche 1 bis 4,
**dadurch gekennzeichnet, dass** die Detektionsschaltung (14) einen Analog-Digital-Wandler (18) zum Wandeln der über der Gassensorzelle (9) anliegenden Spannung (Vs) aufweist.

**6.** Ansteuerschaltung für einen elektrochemischen Gassensor nach einem der Ansprüche 1 bis 5,
**dadurch gekennzeichnet, dass** die Detektionsschaltung (14) einen Speicher (21) mit einem Datensatz für Eigenschaften von Gassensorzellen (9) aufweist.

**7.** Ansteuerschaltung für einen elektrochemischen Gassensor nach einem der Ansprüche 1 bis 6,
**dadurch gekennzeichnet, dass** die Detektionsschaltung (14) einen Analog-Digital-Wandler (18) zum Wandeln der Spannung über der Sensorzelle in ein digitales Signal aufweist.

**8.** Baugruppe aus einer Ansteuerschaltung nach einem der Ansprüche 1 bis 7 und einer Gassensorzelle,
**dadurch gekennzeichnet, dass** die Gassensorzelle (9) zur Abgasbestimmung dient.

**9.** Verwendung einer Ansteuerschaltung nach einem der Ansprüche 1 bis 7 in einem Kraftfahrzeug zum Regeln des Luft-Kraftstoff-Gemisches für einen Motor des Kraftfahrzeugs.

**10.** Verfahren zum Einstellen eines elektrochemischen Gassensors mit folgenden Schritten:

a) Bereitstellen einer Ansteuerschaltung nach einem der Ansprüche 1 bis 9 und eines Gassensors,

b) Ansteuern des Ausgangs des digitalen Reglers (2) derart, dass Strom in den Gassensor einen Stromsprung aufweist,
c) Detektieren der Eigenschaften des Gassensorzelle (9) anhand der Spannung (Vs) am Rückkopplungseingang (160) des digitalen Reglers (2),
d) Einstellen der Eigenschaften des digitalen Reglers (2).

**11.** Verfahren nach Anspruch 10,
**dadurch gekennzeichnet, dass** das Verfahren für einen Gassensor (1) zum Überprüfen des Abgasstroms eines Motors verwendet wird und die Schritte b) und c) zumindest beim Starten des Motors durchgeführt werden.


**Claims**

**1.** Control circuit for an electrochemical gas sensor (1) for a motor vehicle, featuring the following:

- a digital controller (2) having a feedback input (4) and an output (7), the digital controller (2) receiving a value (Vs) for the voltage present across a gas sensor cell (9) by way of the feedback input (4) and the output (7) supplying a control value for the current (Ip) flowing into the gas sensor cell (9),
- a detection circuit (14) for detecting the properties of the gas sensor cell (9) and for adjusting the dynamic control properties of the digital controller (2) according to the properties of the gas sensor cell (9),

**characterised in that**
the detection circuit (14) is configured so that it detects the properties of the gas sensor cell (9) based on the voltage (10) dropping across the gas sensor cell (9) when a step is applied to the current (Ip) flowing into the gas sensor cell (9).

**2.** Control circuit for an electrochemical gas sensor according to claim 1,
**characterised in that** the detection circuit (14) is provided at least partially in a microcontroller.

**3.** Control circuit for an electrochemical gas sensor according to claim 1 or 2,
**characterised in that**
the detection circuit (14) calculates the properties of the gas sensor cell (9) based on the step response of the gas sensor cell (9).

**4.** Control circuit for an electrochemical gas sensor according to one of claims 1 to 3,
**characterised in that** the detection circuit (14) calculates the properties of the gas sensor cell (9) based on the impedance (12) of the gas sensor cell (9).

5. Control circuit for an electrochemical gas sensor according to one of claims 1 to 4, **characterised in that** the detection circuit (14) features an analogue/digital converter (18) for converting the voltage (Vs) present across the gas sensor cell (9).

6. Control circuit for an electrochemical gas sensor according to one of claims 1 to 5, **characterised in that** the detection circuit (14) features a storage unit (21) having a data record for properties of gas sensor cells (9).

7. Control circuit for an electrochemical gas sensor according to one of claims 1 to 6, **characterised in that** the detection circuit (14) features an analogue/digital converter (18) for converting the voltage across the sensor cell to a digital signal.

8. Assembly consisting of a control circuit according to one of claims 1 to 7 and a gas sensor cell, **characterised in that** the gas sensor cell (9) is used to determine exhaust gas.

9. Use of a control circuit according to one of claims 1 to 7 in a motor vehicle for controlling the air/fuel mixture for an engine of the motor vehicle.

10. Method for adjusting an electrochemical gas sensor having the following steps:

a) supplying a control circuit according to one of claims 1 to 9 and a gas sensor,
b) controlling the output of the digital controller (2) so that current into the gas sensor features a current step,
c) detecting the properties of the gas sensor cell (9) based on the voltage (Vs) at the feedback input (160) of the digital controller (2),
d) adjusting the properties of the digital controller (2).

11. Method according to claim 10, **characterised in that** the method is used for a gas sensor (1) for checking the exhaust gas flow of an engine and steps b) and c) are performed at least when the engine is started up.

**Revendications**

1. Circuit de commande pour un capteur de gaz électrochimique (1) pour un véhicule à moteur, comprenant :

- un régulateur numérique (2) comportant une entrée de rétroaction (4) et une sortie (7), le régulateur numérique (2) recevant, par l'intermédiaire de l'entrée de rétroaction (4), une valeur (Vs) pour la tension présente entre les bornes d'une cellule formant capteur de gaz (9), et la sortie (7) fournissant une valeur de réglage pour l'intensité (Ip) du courant pénétrant dans la cellule formant capteur de gaz (9),
- un circuit de détection (14), pour détecter les propriétés de la cellule formant capteur de gaz (9) et pour ajuster les propriétés de régulation dynamique du régulateur numérique (2) en fonction des propriétés de la cellule formant capteur de gaz (9),

**caractérisé en ce que** le circuit de détection (14) est configuré de façon à détecter, à l'aide de la chute de tension (10) entre les bornes de la cellule formant capteur de gaz (9), lors de l'application d'un saut de l'intensité (Ip) du courant pénétrant dans la cellule formant capteur de gaz (9), les propriétés de la cellule formant capteur de gaz (9).

2. Circuit de commande pour un capteur de gaz électrochimique selon la revendication 1, **caractérisé en ce que** le circuit de détection (14) est au moins partiellement prévu dans un microcontrôleur.

3. Circuit de commande pour un capteur de gaz électrochimique selon la revendication 1 ou 2, **caractérisé en ce que** le circuit de détection calcule, à l'aide de la réponse en saut de la cellule formant capteur de gaz (9), les propriétés de la cellule formant capteur de gaz (9).

4. Circuit de commande pour un capteur de gaz électrochimique selon l'une des revendications 1 à 3, **caractérisé en ce que** le circuit de détection (14) calcule, à l'aide de l'impédance (12) de la cellule formant capteur de gaz (9), les propriétés de la cellule formant capteur de gaz (9).

5. Circuit de commande pour un capteur de gaz électrochimique selon l'une des revendications 1 à 4, **caractérisé en ce que** le circuit de détection (14) comprend un convertisseur analogique-numérique (18) pour convertir la tension (Vs) présente entre les bornes de la cellule formant capteur de gaz (9).

6. Circuit de commande pour un capteur de gaz électrochimique selon l'une des revendications 1 à 5, **caractérisé en ce que** le circuit de détection (14) comprend une mémoire (21), avec un jeu de données pour les propriétés des cellules de capteur de gaz (9).

7. Circuit de commande pour un capteur de gaz électrochimique selon l'une des revendications 1 à 6, **caractérisé en ce que** le circuit de détection (14) comprend un convertisseur analogique-numérique (18) pour convertir la tension entre les bornes de la cellule formant capteur en un signal numérique.

8. Sous-ensemble d'un circuit de commande selon l'une des revendications 1 à 7 et d'une cellule formant capteur de gaz, **caractérisé en ce que** la cellule formant capteur de gaz (9) sert à la détermination de gaz d'échappement.

9. Utilisation d'un circuit de commande selon l'une des revendications 1 à 7 dans un véhicule à moteur pour réguler le mélange air-carburant pour un moteur du véhicule à moteur.

10. Procédé pour ajuster un capteur de gaz électrochimique, comportant les étapes suivantes :

   a) fourniture d'un circuit de commande selon l'une des revendications 1 à 9 et d'un capteur de gaz,
   b) commande de la sortie du régulateur numérique (2) de telle sorte que l'intensité du courant pénétrant dans le capteur de gaz présente un saut d'intensité,
   c) détection des propriétés de la cellule formant capteur de gaz (9) à l'aide de la tension (Vs) au niveau de l'entrée de rétroaction (160) du régulateur numérique (2),
   d) ajustement des propriétés du régulateur numérique (2).

11. Procédé selon la revendication 10, **caractérisé en ce que** le procédé est utilisé pour un capteur de gaz (1) dans le but de contrôler le courant de gaz d'échappement d'un moteur, et que les étapes b) et c) sont mises en oeuvre au moins lors du démarrage du moteur.

FIG 1

EP 2 271 920 B1

FIG 2

**IN DER BESCHREIBUNG AUFGEFÜHRTE DOKUMENTE**

**In der Beschreibung aufgeführte Patentdokumente**

- DE 102005033263 A1